# EUROPEAN PATENT APPLICATION

(11) **EP 2 466 261 A2**
(43) Date of publication of application: **20.06.2012**
(21) Application number: 11191396.8
(22) Date of filing: 30.11.2011
(51) Int. Cl.: G01C 21/36

(54) **NAVIGATION DEVICE, NAVIGATION METHOD, AND PROGRAM**

(30) Priority: 14.12.2010 JP 2010278160
(71) Applicant: Aisin AW Co., Ltd., Aichi-ken 444-1192 (JP)
(72) Inventor: Kono, Michitaka, ANJO-SHI, AICHI-KEN, 444-1192 (JP); Tanizaki, Daisuke, ANJO-SHI, AICHI-KEN, 444-1192 (JP)
(74) Representative: Desormiere, Pierre-Louis

(57) **Abstract**

The invention provides a navigation device (1) comprising: a vehicle location acquisition unit (11) for acquiring a vehicle location, a map information storage unit (25) for storing map information (26) including road width information, a destination setting unit (13, 14, 18) configured to set a destination, a route search unit (13) for searching for a route to the destination based on the map information (26), a route guidance unit (13, 15, 16) for performing route guidance based on the route; and a last branch point acquisition unit (13) for acquiring a last branch point on the route, wherein based on a road width of an entering link entering the last branch point and a distance from the last branch point to the destination, the route guidance unit determines a point at which last guidance to the destination is to be given.

The invention also provides the corresponding method and program.

## Description

### BACKGROUND OF THE INVENTION

The present invention relates to a navigation device, a navigation method, and a program for route guidance.

### Description of the Related Art

Conventionally, various technologies for guiding a route from a vehicle location to a destination have been proposed.
For example, a navigation device is proposed that is configured to change the arrival determination distance, according to which a determination is made whether the vehicle has arrived at the destination, according to the road type of the road leading to the destination and, when the distance from the vehicle location to the destination becomes equal to or smaller than the arrival determination distance, outputs a guidance message indicating that the vehicle has arrived at the destination (For example, see Japanese Patent Application Publication No. 2005-30864).

### SUMMARY OF THE INVENTION

However, the navigation device described in Japanese Patent Application Publication No. 2005-30864 has the following problems. When the road type of the road leading to the destination is a "national road", the arrival determination distance is defined as "100m". Therefore, when the distance from the last branch point (last intersection) on the route to the destination is "80m", the navigation device outputs the message, which indicates that the vehicle has arrived at the destination, at a point "100m" before the destination without outputting the message about the last branch point. The problem is that the driver hearing this message may pass the last intersection and may not arrive at the destination smoothly.

When the road type of the road leading to the destination is a "narrow street", the arrival determination distance is defined as "20m". Therefore, when the distance from the last branch point (last intersection) to the destination is "20m", the navigation device outputs the message, which indicates that the vehicle has arrived at the destination, at the last intersection without outputting the traveling direction message at the last intersection. The problem is that the driver hearing this message may travel in a wrong direction at the last intersection and may not arrive at the destination smoothly.

The present invention is made to solve the problems described above, and it is an object of the present invention to provide a navigation device, a navigation method, and a program for guiding a vehicle to a destination smoothly.

A navigation device according to a first aspect of the invention determines a point, at which last guidance to a destination is to be given, based on the road width of an entering link entering the last branch point on a route and the distance from the last branch point to the destination. This allows the navigation device to determine the point, at which the last guidance to the destination is to be given, regardless of the road type of the road leading to the destination, thus giving the last guidance so that the vehicle can arrive at the destination smoothly. The invention provides in particular a navigation device comprising:
a vehicle location acquisition unit configured to acquire a vehicle location;
a map information storage unit configured to store map information including road width information on a road width;
a destination setting unit configured to set a destination;
a route search unit configured to search for a route to the destination based on the map information;
a route guidance unit configured to perform route guidance based on the route; and
a last branch point acquisition unit configured to acquire a last branch point on the route, wherein
based on a road width of an entering link entering the last branch point and a distance from the last branch point to the destination, the route guidance unit determines a point at which last guidance to the destination is to be given.

The navigation device according to a second aspect of the invention requires that the vehicle change the traveling direction from the last branch point to the destination if the road width of the entering link entering the last branch point is smaller than the distance from the last branch point to the destination. This allows the navigation device to determine the last branch point as the point, at which the last guidance to the destination is to be given, and to give the last guidance at the last branch point, thus giving smooth guidance to the destination.
In a particular embodiment of the navigation system, if the road width of the entering link entering the last branch point is smaller than the distance from the last branch point to the destination, the route guidance unit determines the last branch point as a point at which last guidance to the destination is to be given.

The navigation device according to a third aspect of the invention detects that the destination is set at a point at or near the last branch point if the road width of the entering link entering the last branch point is equal to or larger than the distance from the last branch point to the destination. This allows the navigation device to determine a branch point before the last branch point as the point, at which the last guidance to the destination is to be given, and to give the last guidance to the destination at the branch point before the last branch point, thus giving reliable guidance to the destination that is set at the last branch point.
In a particular embodiment of the navigation system, if the road width of the entering link entering the last branch point is equal to or larger than the distance from the last branch point to the destination, the route guidance unit determines a branch point before the last branch point as a point at which the last guidance to the destination is to be given.

The navigation device according to a fourth aspect of the invention gives the last guidance to the destination including guidance on the traveling direction at a branch point on a route, thus giving reliable guidance on the traveling direction at the last branch point regardless of the road type of the road leading to the destination.
In a particular embodiment of the navigation system, the last guidance to the destination includes guidance on a traveling direction at the branch point on the route.

The navigation device according to a fifth aspect of the invention gives the last guidance to the destination including guidance indicating that the vehicle has arrived at the destination, thus giving guidance indicating that the vehicle has arrived at the destination regardless of the road type of the road leading to the destination even if the destination is set at the last branch point.
Accordingly, in a particular embodiment of the navigation system, the last guidance to the destination includes guidance indicating that a vehicle has arrived at the destination.

In addition, the navigation device according to a sixth aspect of the invention is able to determine the point, at which the last guidance to the destination is to be given, more accurately based on the distance from the last branch point to a road sign on the exiting link and the distance from the last branch point to the destination if the map information includes road sign information on a road sign on the entering link entering the last branch point and a road sign on the exiting link exiting from the last branch point.
Accordingly, in a particular embodiment of the navigation system, if the map information (26) includes road sign information on a road sign on an entering link entering the last branch point (101) and a road sign (103) on an exiting link (102) exiting from the last branch point, the route guidance unit uses a distance (L5) from the last branch point (101) to the road sign (103) on the exiting link as the road width.

The navigation method according to a seventh aspect of the invention determines a point, at which the last guidance to the destination is to be given, based on the road width of the entering link entering the last branch point on a route and the distance from the last branch point to the destination. This makes it possible to determine a point, at which the last guidance to the destination is to be given, regardless of the road type of the road leading to the destination, thus giving the last guidance so that the vehicle can arrive at the destination smoothly.
Accordingly, the invention also provides a navigation method comprising the steps of:
acquiring a vehicle location;
setting a destination;
searching for a route to the destination based on map information that includes road width information on a road width;
acquiring a last branch point on the route searched for in the route search step; and
performing route guidance based on the route searched for in the route search step wherein,
based on a road width of an entering link entering the last branch point acquired in the last branch point acquisition step and a distance from the last branch point to the destination, a point at which last guidance to the destination is to be given is determined in the route guidance step.

In addition, when a computer reads the program according to an eighth aspect of the invention, the computer determines a point, at which the last guidance to the destination is to be given, based on the road width of the entering link entering the last branch point on a route and the distance from the last branch point to the destination. Therefore, the computer is able to determine the point, at which the last guidance to the destination is to be given, regardless of the road type of a road leading to the destination, thus giving the last guidance so that the vehicle can arrive at the destination smoothly.
Accordingly, in a particular embodiment of the invention, the various steps of the navigation method are specified by computer program instructions.
Accordingly, the invention also provides a computer program on a recording medium, this computer program being arranged to be implemented by a navigation device, and more generally by a computer, this computer program comprising instructions adapted for the implementation of a navigation method as described above.
The invention also provides a recording medium readable by a navigation device, or more generally by a computer, this recording medium comprising computer program instructions as mentioned above.

### BRIEF DESCRIPTION OF THE DRAWINGS

FIG. 1 is a block diagram showing a navigation device according to an embodiment of the invention;
FIG. 2 is a main flowchart showing the route guidance processing for route guidance to a destination;
FIG. 3 is a sub-flowchart showing the sub-processing of "last guidance branch point setting processing 1" in FIG. 2;
FIG. 4 is a sub-flowchart showing the sub-processing of "last guidance branch point setting processing 2" in FIG. 2;
FIG. 5 is a sub-flowchart showing the sub-processing of "last guidance branch point setting processing 3" in FIG. 2;
FIG. 6 is a diagram showing an example of last guidance when the last branch point is on a road not divided into the inbound lane and outbound lane;
FIG. 7 is a diagram showing an example of last guidance when the last branch point is on a road not divided into the inbound lane and outbound lane;
FIG. 8 is a diagram showing an example of last guidance when the last branch point is on a road divided into the inbound lane and outbound lane;
FIG. 9 is a diagram showing an example of last guidance when the last branch point is on a road divided into the inbound lane and outbound lane;
FIG. 10 is a diagram showing an example of last guidance when the last branch point is in a road sign information stored area; and
FIG. 11 is a diagram showing an example of last guidance when the last branch point is in a road sign information stored area.

### DETAILED DESCRIPTION OF THE EMBODIMENTS

A navigation device, a navigation method, and a program according to an embodiment of the present invention will be described in detail below with reference to the drawings.

### [General configuration of navigation device]

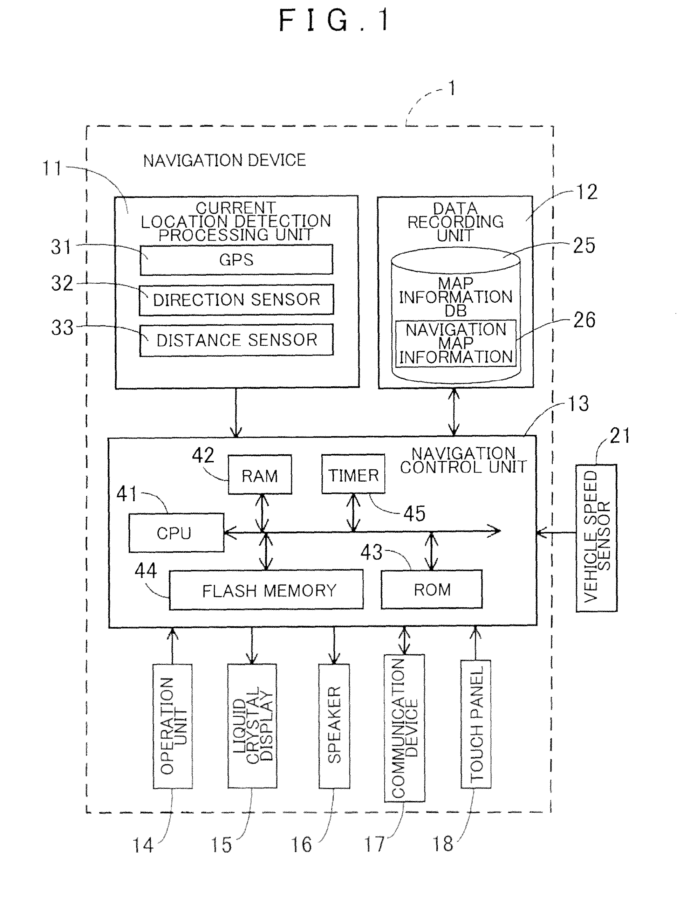

First, the general configuration of a navigation device 1 according to the embodiment will be described with reference to FIG 1. FIG. 1 is a block diagram showing the navigation device I according to the embodiment.
As shown in FIG. 1, the navigation device 1 according to the embodiment includes a current location detection processing unit 11 that detects the current location of a vehicle, a data recording unit 12 in which various types of data are recorded, a navigation control unit 13 that performs various types of computation processing based on received information, an operation unit 14 that accepts an operation from an operator, a liquid crystal display 15 that displays information, such as a map, to the operator, a speaker 16 that outputs voice guidance about route guidance and so on, a communication device 17 that carries out communication with the road traffic information center or the map information delivery center, not shown, via the mobile phone network, and a touch panel 18 installed on the surface of the liquid crystal display 15. A vehicle speed sensor 21, which detects the traveling speed of the vehicle, is connected to the navigation control unit 13.

The following describes the components of the navigation device 1. The current location detection processing unit 11, which includes a GPS 31, an orientation sensor 32, and a distance sensor 33, is capable of detecting the current location of the vehicle (hereinafter called "vehicle location"), the vehicle orientation that represents the orientation of the vehicle, and the travel distance.

The data recording unit 12 includes a hard disk (not shown) used as an external storage device and a recording medium, a map information database (map information DB) 25 stored on the hard disk, and a driver (not shown) that reads a predetermined program and, at the same time, writes predetermined data on the hard disk.

The map information DB 25 stores navigation map information 26 used for travel guidance and route search performed by the navigation device 1. The navigation map information 26 is composed of various types of information necessary for route guidance and map display. For example, this information includes the following: new road information for identifying new roads, map display data for displaying a map, intersection data on the intersections, node data on the node points, link data on the roads (links), search data for searching for a route, store data on Point of Interest (POI) such as a store that is one type of facilities, and search data for searching for a point. The navigation map information 26 stores the coordinate locations (for example, latitude and longitude) of the road signs on a road, such as center lines, roadside zones, pedestrian crossings, and stop lines, in the areas of prefectural capitals and ordinance-designated cities (road sign information stored areas).

The link data is recorded as follows. For each link configuring a road, the data representing the following is recorded: the link ID identifying the link, the link length indicating the length of the link, the coordinate locations (for example, latitude and longitude) of the start point and the end point of the link, the presence of absence of a median, the width, gradient, cant, and bank of a road to which the link belongs, the state of a road surface, the number of lanes on a road, the location where the number of lanes decreases, the location where the width becomes narrow, and the railroad crossings. For a corner, the data representing the curvature radius, intersection, T-shaped road, and entrance and the exit of the corner is recorded. For the road attributes, the data representing whether the road is an uphill slope or a downhill slope is recorded. For the road type, the data representing an open road, such as a national road, a prefectural road, or a narrow street, and a toll road, such as a national expressway, an urban expressway, an ordinary toll road, or a toll bridge, is recorded.

The store data is stored as follows. That is, data on the name, address, telephone number, and map coordinate location (for example, latitude and longitude) of a POI (for example, a hotel, amusement park, palace, hospital, gas station, parking lot, station, airport, ferry stop) in each area and data on a facility icon that displays the location of a facility on the map are stored with the ID that identifies the POI.
The contend of the map information DB 25 is updated by downloading the update information delivered from the map information delivery center, not shown, via the communication device 17.

As shown in FIG. 1, the navigation control unit 13, one of the components of the navigation device 1, includes a CPU 41 that acts as a computation device and a control device for controlling the whole navigation device 1. The navigation control unit 13 also includes the three internal storage devices, that is, a RAM 42 which is used as the working memory when the CPU 41 performs various types of computation processing and in which route data is stored when a route search is made, a ROM 43 in which the control programs are stored, and a flash memory 44 in which a program read from the ROM 43 is stored, as well as a timer 45 that measures the time.

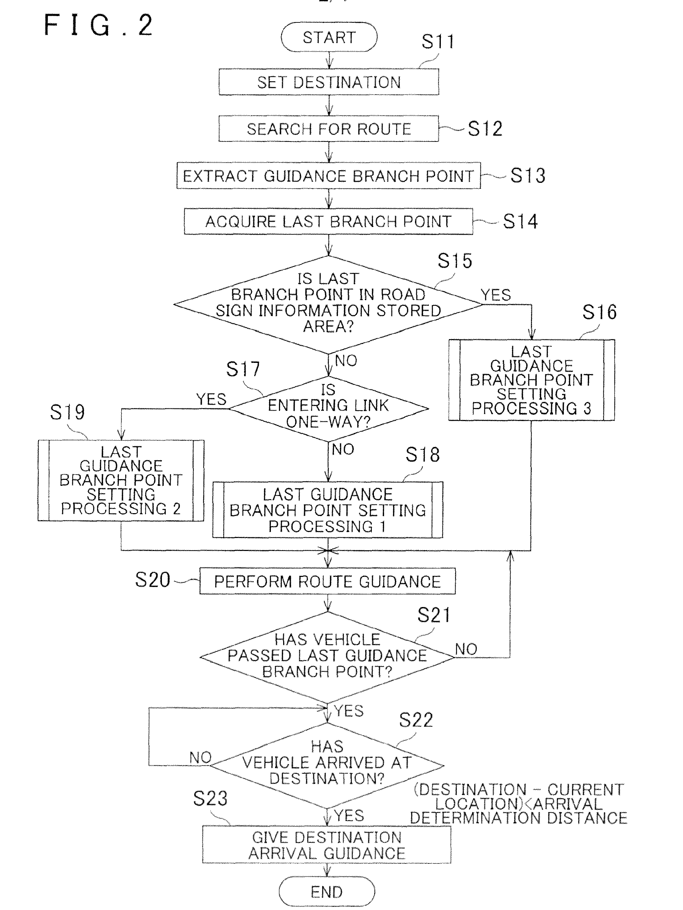

The ROM 43 stores a program for performing the route guidance processing (see FIG. 2) that guides the driver to the destination of a calculated route. The route guidance processing will be described later.
In addition, the peripheral devices (actuators) such as the operation unit 14, liquid crystal display 15, speaker 16, communication device 17, and touch panel 18 are electrically connected to the navigation control unit 13.

This operation unit 14, configured by various keys and multiple operation switches, is used to correct the current position and enter the start location that is the guidance start point and the destination that is the guidance end point when the traveling starts and to search for the information on a facility. Based on the switch signal output by pressing a switch, the navigation control unit 13 controls the execution of the corresponding operation.

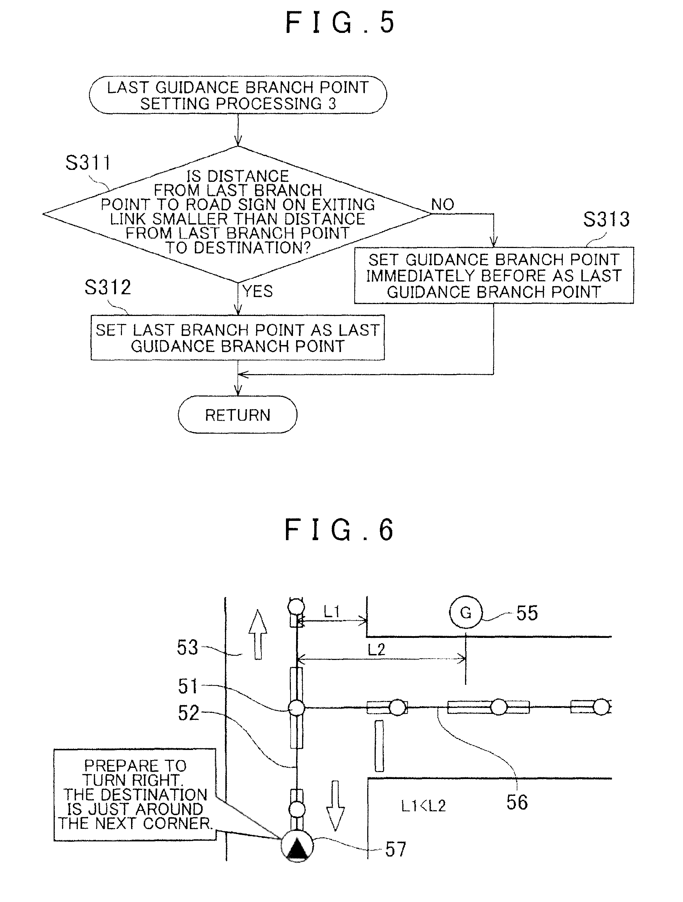

The information displayed on the liquid crystal display 15 includes the map information on the area where the vehicle is now traveling (see FIG. 6, etc.), map information on an area including the destination, operation guidance, operation menu, key guidance, recommended route from the current location to the destination, guidance information on the area along the recommended route, traffic information, news, weather forecast, time of day, mail, and TV programs.

The speaker 16 outputs voice guidance, which guides the driver to drive along the recommended route, based on an instruction from the navigation control unit 13. Voice guidance that is output is, for example, "turn right at XX intersection that is 200m ahead".

The communication device 17, a unit for communicating with the map information delivery center, not shown, via the mobile phone network, transmits and receives the latest-version updated map information to and from the map information delivery center. The communication device 17 receives not only map information transmitted from the map information delivery center but also traffic information, composed of various types of information such as traffic congestion information and the congestion state of a service area, transmitted from the road traffic information center.

The touch panel 18, composed of transparent, panel-like touch switches provided on the display screen of the liquid crystal display 15, is configured to allow various instruction commands to be entered by pressing a button or a map displayed on the screen of the liquid crystal display 15. The touch panel 18 may also be configured by the optical sensor liquid crystal method that allows the user to directly press the screen of the liquid crystal display 15.

### [Route guidance processing]

Next, with reference to FIGS. 2 to 11, the following describes the route guidance processing, which is executed by the CPU 41 of the navigation device 1 with the above-described configuration, for guiding the driver to the destination of a calculated route. The program shown in the flowchart in FIG. 2 is executed by the CPU 41 at a regular interval (for example, at an interval of 10 to 100 milliseconds).

As shown in FIG. 2, when a destination on the map image is pressed via the touch panel 18 or the information such as the telephone number of a destination is entered via the operation switch on the operation unit 14, the CPU 41 first reads the coordinate data (for example, latitude and longitude data) of this destination from the navigation map information 26 and stores the coordinate data in the RAM 42 in step (hereinafter abbreviated S) 11.

In S12, the CPU 41 detects the current location of the vehicle (hereinafter called "vehicle location") based on the detection result of the current location detection processing unit 11 and stores the vehicle location in the RAM 42. The CPU 41 searches for a route from the start point, which is the vehicle location, to the destination stored in the RAM 42 based on the navigation map information 26 using, for example, the Dijkstra's Algorithm. After that, the CPU 41 stores the calculated route from the start point to the destination in the RAM 42 as a recommended route.

Next, in S 13, the CPU 41 reads node data on the node points on the recommended route from the navigation map information 26 sequentially from the vehicle location to the destination and, for each node point, determines if the node point is located at an intersection on the map. If one or more node points on the recommended route are located at an intersection, the CPU 41 stores those node points in the RAM 42 sequentially from the vehicle location to the destination, each as a guidance branch point.

In S 14, the CPU 41 reads a guidance branch point, which is stored in the RAM 42 and is nearest to the destination, that is, the last-stored guidance branch point, and stores the guidance branch point in the RAM 42 as a last branch point.

Next, in S15, the CPU 41 reads the last branch point from the RAM 42 and performs the determination processing for determining if the coordinate location of the last branch point is on the road sign information stored area based on the navigation map information 26. That is, the CPU 41 determines if the last branch point is located within an area whose road sign coordinate locations are stored (for example, within the area of a prefectural capital and an ordinance-designated city). If it is determined that the last branch point is located within a road sign information stored area (S 15: YES), the CPU 41 passes control to the processing in S 16 and executes the sub-processing of "last guidance branch point setting processing 3" (see FIG. 5), which will be described later, for setting the guidance branch point at which the last guidance about the recommended route will be made. After that, the CPU 41 passes control to the processing in S20.

On the other hand, if it is determined that the last branch point is not located within a road sign information stored area (S15: NO), the CPU 41 passes control to the processing in S 17. In S 17, the CPU 41 reads the link data on the last branch point from the navigation map information 26 and performs the determination processing for determining if the entering link that enters the last branch point is one way. The link is one way, for example, when the one-way restriction is imposed on the road or when the road has a median and the inbound lane and the outbound lane are treated as separate links.

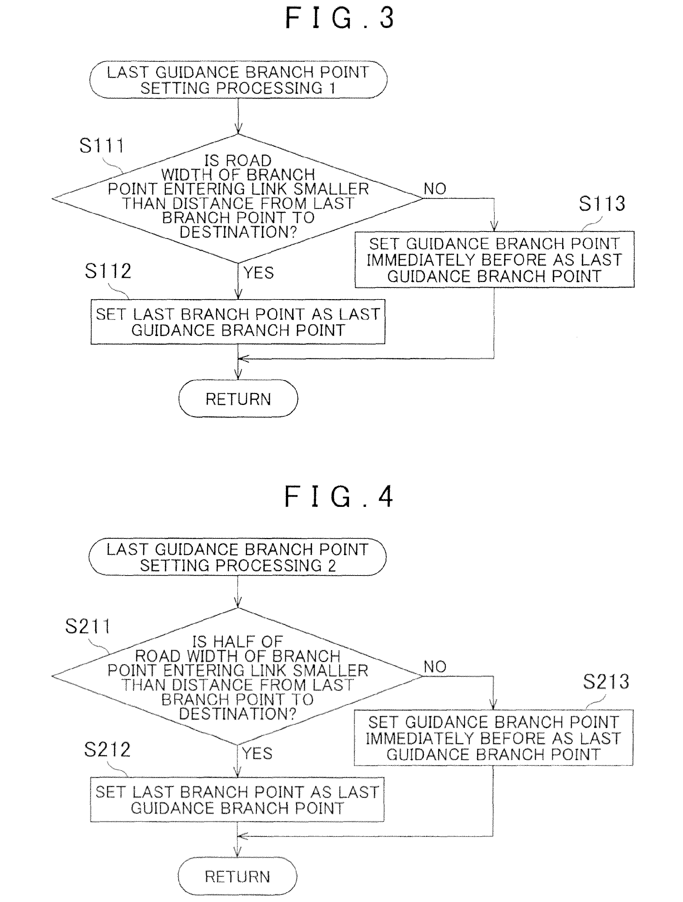

If it is determined that the entering link that enters the last branch point is not one way (S 17: NO), the CPU 41 passes control to the processing in S 18 and executes the sub-processing of "last guidance branch point setting processing 1" (see FIG. 3), which will be described later, for setting the last guidance branch point of the recommended route. After that, the CPU 41 passes control to the processing in S20. On the other hand, if it is determined the entering link that enters the last branch point is one way (S17: YES), the CPU 41 passes control to the processing in S 19 and executes the sub-processing of "last guidance branch point setting processing 2" (see FIG. 4), which will be described later, for setting the last guidance branch point of the recommended route. After that, the CPU 41 passes control to the processing in S20.

In S20, the CPU 41 performs route guidance along the recommended route with the map displayed on the liquid crystal display 15 where the recommended route is displayed as a solid blue line and the vehicle location is displayed as the vehicle location mark. The CPU 41 reads a guidance branch point, which is on the recommended route and closest to the vehicle location mark in the traveling direction, from the RAM 42 and, if the distance from the vehicle location to the guidance branch point becomes a predetermined distance (for example, about 50m), gives guidance about the traveling direction at this guidance branch point.

Next, in S21, the CPU 41 executes the determination processing for determining if the vehicle has passed the last guidance branch point that is set in S 16, S 18, or S19, that is, if guidance about the traveling direction at the last guidance branch point has been given. If it is determined that the vehicle has not yet passed the last guidance branch point (S21: NO), the CPU 41 executes the processing in S20 and the following steps again.

On the other hand, if it is determined that the vehicle has passed the last guidance branch point (S21: YES), the CPU 41 passes control to the processing in S22. In S22, the CPU 41 executes the determination processing for determining if the vehicle has arrived at the destination at predetermined intervals (for example, about 100-millisecond intervals). More specifically, the CPU 41 reads the arrival determination distance (for example, about 100m) from the ROM 43 and determines if the distance from the vehicle location to the destination becomes smaller than the arrival determination distance.

If it is determined that the distance from the vehicle location to the destination is equal to or longer than the arrival determination distance (S22: NO), the CPU 41 repeats the processing in S22. On the other hand, if it is determined that the distance from the vehicle location to the destination becomes smaller than the arrival determination distance (S22: YES), the CPU 41 passes control to the processing in S23.
In S23, the CPU 41 gives voice guidance indicating that the vehicle has arrived at the destination or, after displaying the message on the liquid crystal display 15 to indicate that the vehicle has arrived at the destination, terminates the processing.

### [Last guidance branch point setting processing 1]

Next, with reference to FIG. 3, FIG. 6, and FIG. 7, the following describes "last guidance branch point setting processing 1" executed in S 18.

As shown in FIG. 3, the CPU 41 reads the width of the road, to which the entering link belongs, from the link data on the entering link entering the last branch point, and stores the width in the RAM 42. The CPU 41 calculates the distance from the last branch point to the destination. After that, in S111, the CPU 41 executes the determination processing for determining if the width of the road, to which the entering link belongs, is smaller than the distance from the last branch point to the destination, that is, if the destination is set at a point after the vehicle passes the last branch point.

If it is determined that the width of the road, to which the entering link belongs, is smaller than the distance from the last branch point to the destination, that is, if it is determined that the destination is set at a point after the vehicle passes the intersection at which the last branch point is located (S111: YES), the CPU 41 passes control to the processing in S112. In S112, the CPU 41 stores the last branch point in the RAM 42 as the last guidance branch point. That is, after setting this last branch point as the last guidance branch point, the CPU 41 terminates the sub-processing, returns to the main flowchart, and passes control to the processing in S20.

For example, if an entering link 52 entering a last branch point 51 is on a road 53 as shown in FIG. 6, the CPU 41 reads a width L1 of the road 53 from the link data on the entering link 52 and stores the width L1 in the RAM 42. The CPU 41 calculates a distance L2 from the last branch point 51 to the perpendicular drawn from a destination 55 to a link 56. The CPU 41 determines that the width L1 of the road 53 is smaller than the distance L2 from the last branch point 51 to the destination 55 (S111: YES) and stores the last branch point 51 in the RAM 42 as the last guidance branch point (S112).

Therefore, as shown in FIG. 6, if the distance from the vehicle location to the destination 55 is smaller than the arrival determination distance (about 100m) when the vehicle location indicated by a vehicle location mark 57 becomes about 50m from the last guidance branch point 51, the CPU 41 gives guidance about the traveling direction at the last guidance branch point 51 and, at the same time, gives voice guidance indicating that the vehicle has arrived at the destination 55 (S20 to S23). For example, when the vehicle location becomes about 50m from the last guidance branch point 51, the CPU 41 gives voice guidance "Prepare to turn right. The destination is just around the next corner" and displays the same guidance on the liquid crystal display 15.

On the other hand, if it is determined that the width of the road, to which the entering link belongs, is equal to or larger than the distance from the last branch point to the destination as shown in FIG. 3, that is, if it is determined that the destination is set at a point in the intersection at which the last branch point is located or at a point along the road of the intersection at which the last branch point is located, (S111: NO), the CPU 41 passes control to the processing in S113. In S113, the CPU 41 stores the guidance branch point immediately before the last branch point in the RAM 42 as the last guidance branch point. That is, the CPU 41 sets the guidance branch point immediately before the last branch point as the last guidance branch point, terminates the sub-processing, returns to the main flowchart, and passes control to the processing in S20.

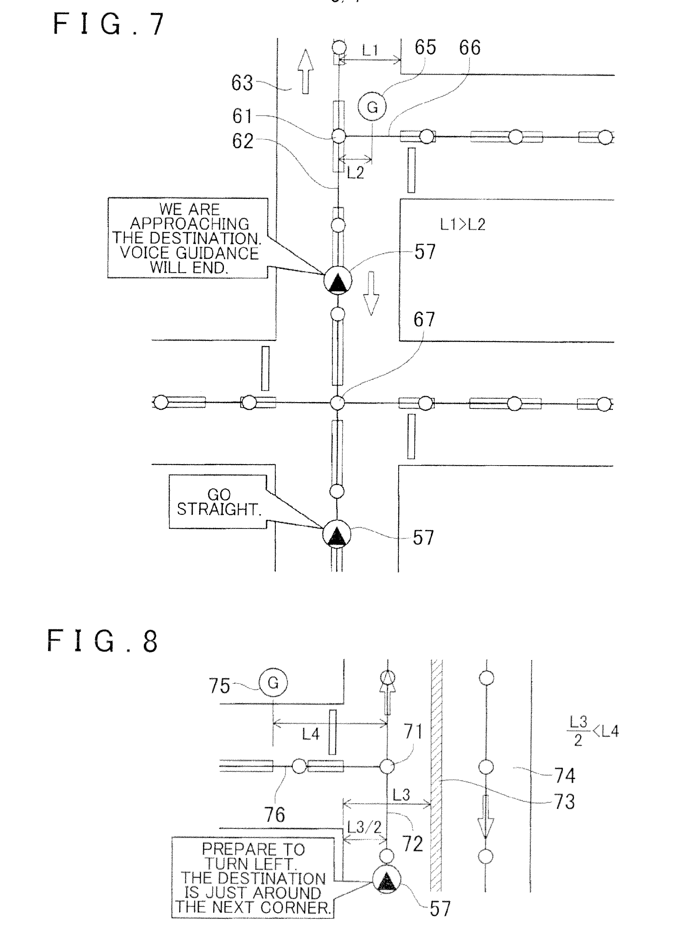

For example, if an entering link 62 entering a last branch point 61 is on a road 63 as shown in FIG. 7, the CPU 41 reads the width L1 of the road 63 from the link data on the entering link 62 and stores the width L1 in the RAM 42. The CPU 41 calculates the distance L2 from the last branch point 61 to the perpendicular drawn from a destination 65 to a link 66. The CPU 41 determines that the width L1 of the road 63 is equal to or larger than the distance L2 from the last branch point 61 to the destination 65 (S111: NO) and stores a guidance branch point 67 (branch point) immediately before the last branch point 61 in the RAM 42 as the last guidance branch point (S 113).

Therefore, when the vehicle location indicated by the vehicle location mark 57 becomes about 50m from a last guidance branch point 67 as shown in FIG. 7, the CPU 41 gives guidance about the traveling direction at the last guidance branch point 67. For example, when the vehicle location becomes about 50m from the last guidance branch point 67, the CPU 41 gives voice guidance "Go straight" and displays the same guidance on the liquid crystal display 15.

When the distance from the vehicle location indicated by the vehicle location mark 57 to the destination 65 becomes smaller than the arrival determination distance (about 100m), the CPU 41 gives voice guidance indicating that the vehicle has arrived at the destination 65 (S20 to S23). For example, when the distance from the vehicle location to the destination 65 becomes smaller than the arrival determination distance (about 100m), the CPU 41 gives voice guidance "We are approaching the destination. Voice guidance will end" and displays the same guidance on the liquid crystal display 15.

### [Last guidance branch point setting processing 2]

Next, with reference to FIG. 4, FIG. 8, and FIG. 9, the following describes "last guidance branch point setting processing 2" executed in S 19 described above.

When the entering link entering the last branch point is one way, for example, when the one-way restriction is imposed on the road or when the road has a median, the CPU 41 reads the width of the road, to which the entering link belongs, from the link data on the entering link entering the last branch point and stores the width in the RAM 42 as shown in FIG 4. The CPU 41 calculates the distance from the last branch point to the destination. After that, in S211, the CPU 41 executes the determination processing for determining if the distance corresponding to the half of the width of the road, to which the entering link belongs, is smaller than the distance from the last branch point to the destination, that is, if the destination is set at a point after the vehicle passes the intersection at which the last branch point is located.

If it is determined that the distance corresponding to the half of the width of the road, to which the entering link belongs, is smaller than the distance from the last branch point to the destination, that is, if it is determined that the destination is set at a point after the vehicle passes the intersection at which the last branch point is located (S211: YES), the CPU 41 passes control to the processing in S212. In S212, the CPU 41 stores the last branch point in the RAM 42 as the last guidance branch point. That is, after setting this last branch point as the last guidance branch point, the CPU 41 terminates the sub-processing, returns to the main flowchart, and passes control to the processing in S20.

For example, if an entering link 72 entering a last branch point 71 is on a road 74 divided by a median 73 as shown in FIG. 8, the CPU 41 reads a width L3 of the lane of the road 74, on which the vehicle is traveling, from the link data on the entering link 72 and stores the width L3 in the RAM 42. The CPU 41 calculates a distance L4 from the last branch point 71 to the perpendicular drawn from a destination 75 to a link 76. The CPU 41 determines that the distance L3/2 corresponding to the half of the width L3 of the lane of the road 74, on which the vehicle is traveling, is smaller than the distance L4 from the last branch point 71 to the destination 75 (S211: YES) and stores the last branch point 71 in the RAM 42 as the last guidance branch point (S212).

Therefore, as shown in FIG. 8, if the distance from the vehicle location to the destination 75 is smaller than the arrival determination distance (about 100m) when the vehicle location indicated by the vehicle location mark 57 becomes about 50m from the last guidance branch point 71, the CPU 41 gives guidance about the traveling direction at the last guidance branch point 71 and, at the same time, gives voice guidance indicating that the vehicle has arrived at the destination 75 (S20 to S23). For example, when the vehicle location becomes about 50m from the last guidance branch point 71, the CPU 41 gives voice guidance "Prepare to turn left. The destination is just around the next corner" and displays the same guidance on the liquid crystal display 15.

On the other hand, if it is determined that the distance corresponding to the half of the width of the road, to which the entering link belongs, is equal to or larger than the distance from the last branch point to the destination as shown in FIG. 4, that is, if it is determined that the destination is set at a point in the intersection at which the last branch point is located or at a point along the road of the intersection at which the last branch point is located, (S211: NO), the CPU 41 passes control to the processing in S213. In S213, the CPU 41 stores the guidance branch point immediately before the last branch point in the RAM 42 as the last guidance branch point. That is, the CPU 41 sets the guidance branch point immediately before the last branch point as the last guidance branch point, terminates the sub-processing, returns to the main flowchart, and passes control to the processing in S20.

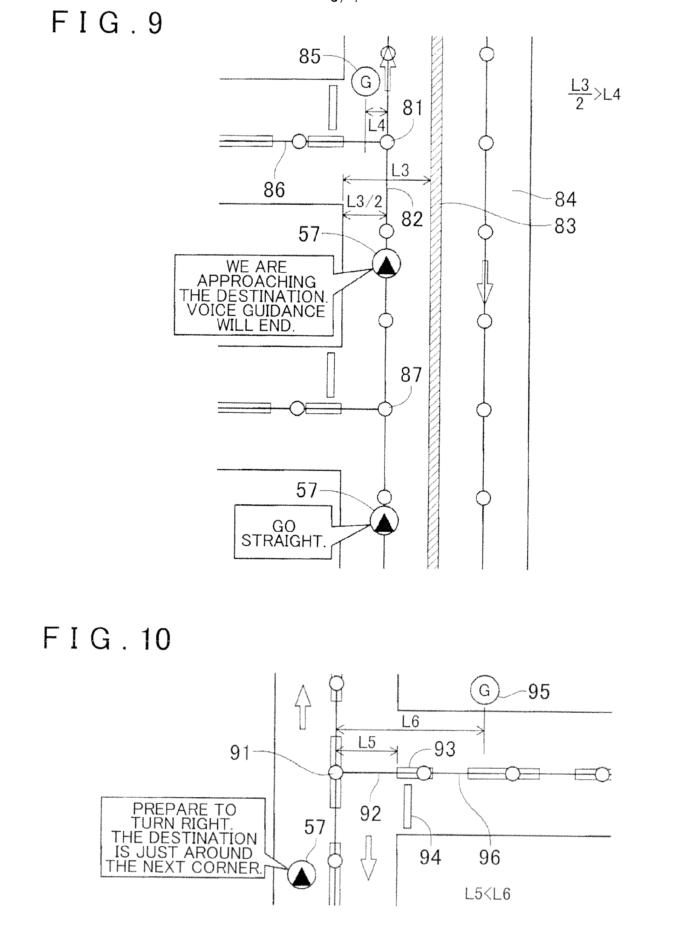

For example, if an entering link 82 entering a last branch point 81 is on a road 84 divided by a median 83 as shown in FIG. 9, the CPU 41 reads the width L3 of the lane of the road 84, on which the vehicle is traveling, from the link data on the entering link 82 and stores the width L3 in the RAM 42. The CPU 41 calculates the distance L4 from the last branch point 81 to the perpendicular drawn from a destination 85 to a link 86. The CPU 41 determines that the distance L3/2 corresponding to the half of the width L3 of the lane of the road 84, on which the vehicle is traveling, is equal to or larger than the distance L4 from the last branch point 81 to the destination 85 (S211: NO) and stores a guidance branch point 87 (branch point) immediately before the last branch point 81 in the RAM 42 as the last guidance branch point (S213).

Therefore, when the vehicle location indicated by the vehicle location mark 57 becomes about 50m from a last guidance branch point 87 as shown in FIG. 9, the CPU 41 gives guidance about the traveling direction at the last guidance branch point 87. For example, when the vehicle location becomes about 50m from the last guidance branch point 87, the CPU 41 gives voice guidance "Go straight" and displays the same guidance on the liquid crystal display 15.

When the distance from the vehicle location indicated by the vehicle location mark 57 to the destination 85 becomes smaller than the arrival determination distance (about 100m), the CPU 41 gives voice guidance indicating that the vehicle has arrived at the destination 85 (S20 to S23). For example, when the distance from the vehicle location to the destination 85 becomes smaller than the arrival determination distance (about 100m), the CPU 41 gives voice guidance "We are approaching the destination. Voice guidance will end" and displays the same guidance on the liquid crystal display 15.

### [Last guidance branch point setting processing 3]

Next, with reference to FIG. 5, FIG. 10, and FIG. 11, the following describes "last guidance branch point setting processing 3" executed in S16 described above.

If the last branch point is located in a road sign information stored area and the entering link entering the last branch point is not one way, the CPU 41 reads the coordinate locations of the road signs (such as a lane paint, a stop line, a pedestrian crossing, and a bicycle crossing zone), provided on an exiting link exiting from the last branch point to the destination, from the navigation map information 26 in S311 as shown in FIG. 5. After that, the CPU 41 calculates the distance from the edge on the last branch point side of a road sign, provided on the exiting link and nearest to the last branch point among the various road signs, to the last branch point and stores the calculated distance in the RAM 42.

The CPU 41 calculates the distance from the last branch point to the destination. After that, the CPU 41 executes the determination processing for determining if the distance from the edge on the last branch point side of the road sign, provided on the exiting link and nearest to the last branch point, to the last branch point is smaller than the distance from the last branch point to the destination, that is, if the destination is set at a point after the vehicle passes the intersection at which the last branch point is located.

If it is determined that the distance from the edge on the last branch point side of the road sign, provided on the exiting link and nearest to the last branch point, to the last branch point is smaller than the distance from the last branch point to the destination, that is, if it is determined that the destination is set at a point after the vehicle passes the intersection at which the last branch point is located (S311: YES), the CPU 41 passes control to the processing in S312. In S312, the CPU 41 stores the last branch point in the RAM 42 as the last guidance branch point. That is, after setting this last branch point as the last guidance branch point, the CPU 41 terminates the sub-processing, returns to the main flowchart, and passes control to the processing in S20.

For example, if a last branch point 91 is in a road sign information stored area as shown in FIG. 10, the CPU 41 reads the coordinate locations of the road sign of a lane paint 93 on an exiting link 92 exiting from the last branch point 91and the road sign of a stop line 94 from the navigation map information 26. The CPU 41 calculates a distance L5 from the edge on the last branch point 91 side of the lane paint 93, provided on the exiting link 92 and nearest to the last branch point 91, to the last branch point 91 1 and stores the calculated distance L5 in the RAM 42.

The CPU 41 calculates a distance L6 from the last branch point 91 to the perpendicular drawn from a destination 95 to a link 96. The CPU 41 determines that the distance L5 from the edge on the last branch point 91 side of the lane paint 93, provided on the exiting link 92 and nearest to the last branch point 91, to the last branch point 91 is smaller than the distance L6 from the last branch point 91 to the destination 95 (S311: YES) and stores the last branch point 91 in the RAM 42 as the last guidance branch point (S312).

Therefore, as shown in FIG. 10, if the distance from the vehicle location to the destination 95 is smaller than the arrival determination distance (about 100m) when the vehicle location indicated by the vehicle location mark 57 becomes about 50m from the last guidance branch point 91, the CPU 41 gives guidance about the traveling direction at the last guidance branch point 91 and, at the same time, gives voice guidance indicating that the vehicle has arrived at the destination 95 (S20 to S23). For example, when the vehicle location becomes about 50m from the last guidance branch point 91, the CPU 41 gives voice guidance "Prepare to turn right. The destination is just around the next corner" and displays the same guidance on the liquid crystal display 15.

On the other hand, if it is determined that the distance from the edge on the last branch point side of the road sign, provided on the exiting link and nearest to the last branch point, to the last branch point is equal to or larger than the distance from the last branch point to the destination as shown in FIG. 5, that is, if it is determined that the destination is set at a point in the intersection at which the last branch point is located or at a point along the road of the intersection at which the last branch point is located, (S311: NO), the CPU 41 passes control to the processing in S313. In S313, the CPU 41 stores the guidance branch point immediately before the last branch point in the RAM 42 as the last guidance branch point. That is, the CPU 41 sets the guidance branch point immediately before the last branch point as the last guidance branch point, terminates the sub-processing, returns to the main flowchart, and passes control to the processing in S20.

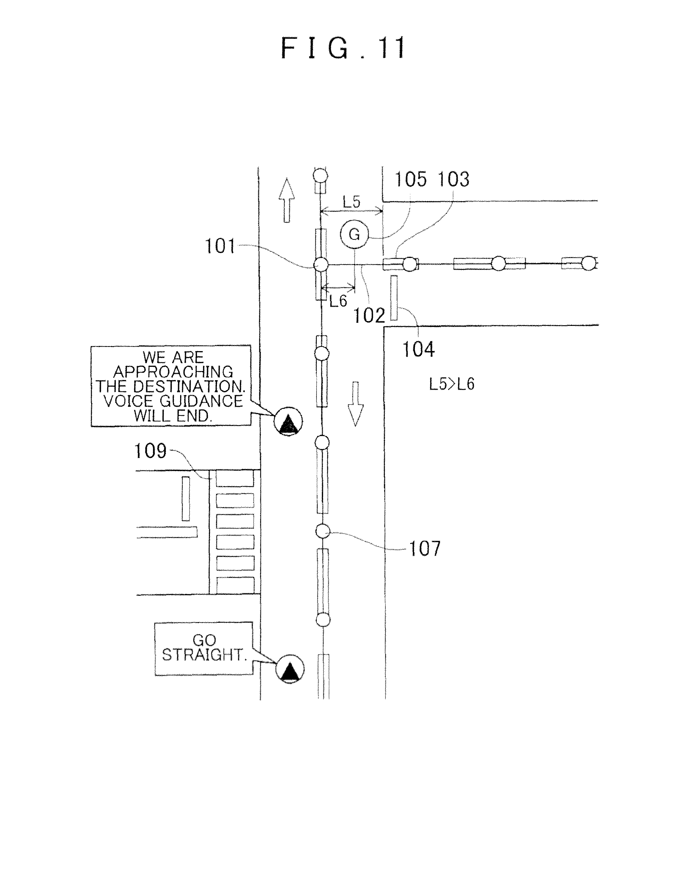

For example, if a last branch point 101 is in a road sign information stored area as shown in FIG. 11, the CPU 41 reads the coordinate locations of the road sign of a lane paint 103 on an exiting link 102 exiting from the last branch point 101 and the road sign of a stop line 104 from the navigation map information 26. The CPU 41 calculates a distance L5 from the edge on the last branch point 101 side of the lane paint 103, provided on the exiting link 102 and nearest to the last branch point 101, to the last branch point 101 and stores the calculated distance L5 in the RAM 42.

If there is a pedestrian crossing 109 on the exiting link 102 exiting from the last branch point 101, the CPU 41 calculates the distance L5 from the edge on the last branch point 101 side of the pedestrian crossing 109, provided on the exiting link 102, to the last branch point 101 and stores the calculated distance L5 in the RAM 42.

The CPU 41 calculates the distance L6 from the last branch point 101 to the perpendicular drawn from a destination 105 to the exiting link 102. The CPU 41 determines that the distance L5 from the edge on the last branch point 101 side of the lane paint 103, provided on the exiting link 102 and nearest to the last branch point 101, to the last branch point 101 is equal to or larger than the distance L6 from the last branch point 101 to the destination 105 (S311: NO) and stores a guidance branch point 107 (branch point) immediately before the last branch point 101 in the RAM 42 as the last guidance branch point (S313).

Therefore, when the vehicle location indicated by the vehicle location mark 57 becomes about 50m from a last guidance branch point 107 as shown in FIG 11, the CPU 41 gives guidance about the traveling direction at the last guidance branch point 107. For example, when the vehicle location becomes about 50m from the last guidance branch point 107, the CPU 41 gives voice guidance "Go straight" and displays the same guidance on the liquid crystal display 15.

When the distance from the vehicle location indicated by the vehicle location mark 57 to the destination 105 becomes smaller than the arrival determination distance (about 100m), the CPU 41 gives voice guidance indicating that the vehicle has arrived at the destination 105 (S20 to S23). For example, when the distance from the vehicle location to the destination 105 becomes smaller than the arrival determination distance (about 100m), the CPU 41 gives voice guidance "We are approaching the destination. Voice guidance will end" and displays the same guidance on the liquid crystal display 15.

In "last guidance branch point setting processing 3", if the last branch point is located in a road sign information stored area and the entering link entering the last branch point is one way, for example, when the one-way restriction is imposed on the road or when the road has a median, the CPU 41 executes the following processing instead of processing S31 to S313 as in "last guidance branch point setting processing 2" described above.

The CPU 41 reads the coordinate locations of the road signs (such as a lane paint, a stop line, a pedestrian crossing, and a bicycle crossing zone), provided on an exiting link exiting from the last branch point to the destination, from the navigation map information 26. After that, the CPU 41 calculates the distance from the edge on the last branch point side of a road sign, provided on the exiting link and nearest to the last branch point among the various road signs, to the last branch point and stores the calculated distance in the RAM 42.

The CPU 41 calculates the distance from the last branch point to the destination. After that, the CPU 41 executes the determination processing for determining if the distance corresponding to the half of the distance from the edge on the last branch point side of the road sign, provided on the exiting link and nearest to the last branch point, to the last branch point is smaller than the distance from the last branch point to the destination, that is, if the destination is set at a point after the vehicle passes the intersection at which the last branch point is located.

If it is determined that the distance corresponding to the half of the distance from the edge on the last branch point side of the road sign, provided on the exiting link and nearest to the last branch point, to the last branch point is smaller than the distance from the last branch point to the destination, that is, if it is determined that the destination is set at a point after the vehicle passes the intersection at which the last branch point is located, the CPU 41 stores the last branch point in the RAM 42 as the last guidance branch point. That is, after setting this last branch point as the last guidance branch point, the CPU 41 terminates the sub-processing, returns to the main flowchart, and passes control to the processing in S20.

On the other hand, if it is determined that the distance corresponding to the half of the distance from the edge on the last branch point side of the road sign, provided on the exiting link and nearest to the last branch point, to the last branch point is equal to or larger than the distance from the last branch point to the destination, that is, if it is determined that the destination is set at a point in the intersection at which the last branch point is located or at a point along the road of the intersection at which the last branch point is located, the CPU 41 stores the guidance branch point immediately before the last branch point in the RAM 42 as the last guidance branch point. That is, the CPU 41 sets the guidance branch point immediately before the last branch point as the last guidance branch point, terminates the sub-processing, returns to the main flowchart, and passes control to the processing in S20.

As described above in detail, if the last branch point is not located in a road sign information stored area and the entering link entering the last branch point is not one way, the CPU 41 of the navigation device 1 in this embodiment determines if the width of the road, to which the entering link belongs, is smaller than the distance from the last branch point to the destination.

If the width of the road, to which the entering link belongs, is smaller than the distance from the last branch point to the destination, the CPU 41 sets the last branch point as the last guidance branch point at which the last guidance to the destination is to be given. By setting the last guidance branch point in this way, the CPU 41 gives the last guidance at the last guidance branch point at which the last guidance to the destination is to be given, thus providing smooth guidance to the destination.

On the other hand, if the width of the road, to which the entering link belongs, is equal to or larger than the distance from the last branch point to the destination, the CPU 41 sets the guidance branch point immediately before the last branch point as the last guidance branch point. By setting the last guidance branch point in this way, the CPU 41 gives the last guidance to the destination at the guidance branch point immediately before the last branch point, thus providing reliable guidance to the destination that is set at a point in the intersection at which the last branch point is located or at a point along the road of the intersection at which the last branch point is located.

If the last branch point is not in a road sign information stored area and the entering link entering the last branch point is one way, the CPU 41 determines if the distance corresponding to the half of the width of the road, to which the entering link belongs, is smaller than the distance from the last branch point to the destination.

If the distance corresponding to the half of the width of the road, to which the entering link belongs, is smaller than the distance from the last branch point to the destination, the CPU 41 sets the last branch point as the last guidance branch point at which the last guidance to the destination is to be given. By setting the last guidance branch point in this way, the CPU 41 gives the last guidance at the last guidance branch point, thus providing smooth guidance to the destination.

On the other hand, if the distance corresponding to the half of the width of the road, to which the entering link belongs, is equal to or larger than the distance from the last branch point to the destination, the CPU 41 sets the guidance branch point immediately before the last branch point as the last guidance branch point. By setting the last guidance branch point in this way, the CPU 41 gives the last guidance to the destination at the guidance branch point immediately before the last branch point, thus providing reliable guidance to the destination that is set at a point in the intersection at which the last branch point is located or at a point along the road of the intersection at which the last branch point is located.

In addition, if the last branch point is located in a road sign information stored area and the entering link entering the last branch point is not one way, the CPU 41 1 determines if the distance from the edge on the last branch point side of the road sign, provided on the exiting link exiting from the last branch point and nearest to the last branch point among various road signs, to the last branch point is smaller than the distance from the last branch point to the destination.

If the distance from the edge on the last branch point side of the road sign, provided on the exiting link and nearest to the last branch point, to the last branch point is smaller than the distance from the last branch point to the destination, the CPU 41 sets the last branch point as the last guidance branch point at which the last guidance to the destination is to be given. By setting the last guidance branch point in this way, the CPU 41 gives the last guidance at the last guidance branch point, thus providing smooth guidance to the destination.

On the other hand, if the distance from the edge on the last branch point side of the road sign, provided on the exiting link and nearest to the last branch point, to the last branch point is equal to or larger than the distance from the last branch point to the destination, the CPU 41 sets the guidance branch point immediately before the last branch point as the last guidance branch point. By setting the last guidance branch point in this way, the CPU 41 gives the last guidance to the destination at the guidance branch point immediately before the last branch point, thus providing reliable guidance to the destination that is set at a point in the intersection at which the last branch point is located or at a point along the road of the intersection at which the last branch point is located.

If the last branch point is located in a road sign information stored area and the entering link entering the last branch point is one way, for example, when the one-way restriction is imposed on the road or when the road has a median, the CPU 41 determines if the distance corresponding to the half of the distance from the edge on the last branch point side of the road sign, provided on the exiting link exiting from the last branch point and nearest to the last branch point among various road signs, to the last branch point is smaller than the distance from the last branch point to the destination.

If the distance corresponding to the half of the distance from the edge on the last branch point side of the road sign, provided on the exiting link and nearest to the last branch point, to the last branch point is smaller than the distance from the last branch point to the destination, the CPU 41 sets the last branch point as the last guidance branch point at which the last guidance to the destination is to be given. By setting the last guidance branch point in this way, the CPU 41 gives the last guidance at the last guidance branch point, thus providing smooth guidance to the destination.

On the other hand, if the distance corresponding to the half of the distance from the edge on the last branch point side of the road sign, provided on the exiting link and nearest to the last branch point, to the last branch point is equal to or larger than the distance from the last branch point to the destination, the CPU 41 sets the guidance branch point immediately before the last branch point as the last guidance branch point. By setting the last guidance branch point in this way, the CPU 41 gives the last guidance to the destination at the guidance branch point immediately before the last branch point, thus providing reliable guidance to the destination that is set at a point in the intersection at which the last branch point is located or at a point along the road of the intersection at which the last branch point is located.

In addition, by executing the processing in S16, S18, and S 19, the CPU 41 can set the last guidance branch point, at which the last guidance to the destination is to be given, regardless of the road type of the road to the destination, thus providing the last guidance that allows the vehicle to arrive at the destination smoothly.

It is to be understood that the present invention is not limited to the embodiment above and that various modifications and changes that may be made within the scope of the spirit of the present invention are included.

## Claims

1. A navigation device (1) comprising:
a vehicle location acquisition unit (II) configured to acquire a vehicle location, said navigation device being **characterised in that** if further comprises:
a map information storage unit (25) configured to store map information (26) including road width information on a road width;
a destination setting unit (13, 14, 18) configured to set a destination (55, 65, 75, 85, 95, 105);
a route search unit (13) configured to search for a route to the destination based on the map information (26);
a route guidance unit (13, 15, 16) configured to perform route guidance based on the route; and
a last branch point acquisition unit (13) configured to acquire a last branch point (51, 61, 71, 81, 91, 101) on the route, wherein
based on a road width (L1, L3, L5) of an entering link (52, 62, 72, 82) entering the last branch point and a distance (L2, L4, L6) from the last branch point to the destination, the route guidance unit determines a point at which last guidance to the destination is to be given.

2. The navigation device according to claim 1 wherein
if the road width (L1, L3, L5) of the entering link (52, 62, 72, 82) entering the last branch point is smaller than the distance from the last branch point (51, 61, 71, 81, 91, 101) to the destination (55, 65, 75, 85, 95, 105), the route guidance unit determines the last branch point as a point at which last guidance to the destination is to be given.

3. The navigation device according to claim 2 wherein
if the road width (L1, L3, L5) of the entering link (52, 62, 72, 82) entering the last branch point is equal to or larger than the distance from the last branch point to the destination, the route guidance unit determines a branch point before the last branch point
as a point at which the last guidance to the destination is to be given.

4. The navigation device according to any one of claims I to 3 wherein
the last guidance to the destination includes guidance on a traveling direction at a branch point on the route.

5. The navigation device according to any one of claims 1 to 3 wherein
the last guidance to the destination includes guidance indicating that a vehicle has arrived at the destination.

6. The navigation device according to any one of claims 1 to 5 wherein
if the map information (26) includes road sign information on a road sign on an entering link entering the last branch point (101) and a road sign (103) on an exiting link (102) exiting from the last branch point, the route guidance unit uses a distance (L5) from the last branch point (101) to the road sign (103) on the exiting link as the road width.

7. A navigation method comprising the steps of:
acquiring (S12) a vehicle location;
setting (S 11) a destination (55, 65, 75, 85, 95, 105), said navigation method being **characterised in that** if further comprises:
searching (S12) for a route to the destination based on map information (26) that includes road width information on a road width;
acquiring (S14) a last branch point (51, 61, 71, 81, 91, 101) on the route searched for in the route search step (S12); and
performing route guidance (S20) based on the route searched for in the route search step (S12) wherein,
based on a road width (L1, L3, L5) of an entering link (52, 62, 72, 82) entering the last branch point (51, 61, 71, 81, 91, 101) acquired in the last branch point acquisition step (S 14) and a distance (L2, L4, L6) from the last branch point to the destination, a point at which last guidance to the destination is to be given is determined in the route guidance step (S20).

8. A computer program comprising instructions for carrying out the method of claim 7 when said computer program is run on a computer.

9. Recording medium (44) readable by a computer (13), said recording medium storing a computer program comprising instructions for performing a navigation method according to claim 7.
